# EUROPÄISCHE PATENTSCHRIFT

(11) **EP 3 590 325 B1**
(45) Veröffentlichungstag und Bekanntmachung des Hinweises auf die Patenterteilung: **04.03.2026**
(21) Anmeldenummer: 19168593.2
(22) Anmeldetag: 11.04.2019
(51) Int. Cl.: A01F 15/07, B65B 57/02

(54) **RUNDBALLENPRESSE UND ERKENNUNGSVERFAHREN**
ROUND BALER AND DETECTION METHOD
PRESSE À BALLES RONDES ET PROCÉDÉ DE DÉTECTION

(30) Priorität: 06.07.2018 DE 102018211228
(43) Veröffentlichungstag der Anmeldung: 08.01.2020
(60) Teilanmeldung: 23210138.6
(73) Patentinhaber: Deere & Company, Moline, IL 61265 (US)
(72) Erfinder: Lebeau, Jonathan, 68163 Mannheim (DE); Gresset, Pascal, 68163 Mannheim (DE); Perrotin, Frederic, 68163 Mannheim (DE)
(74) Vertreter: Stein, Stefan

(56) Entgegenhaltungen:
- EP-A1- 1 464 216
- EP-A2- 1 461 995
- US-A1- 2017 006 779
- US-B2- 8 434 289
- US-B2- 8 573 480

## Beschreibung

Die Erfindung betrifft eine Rundballenpresse gemäss dem Oberbegriff des unabhängigen Anspruchs 1 und ein Erkennungsverfahren zur Erkennung einer ersten Folie auf einer Oberfläche eines Rundballens gemäss dem Oberbegriff des unabhängigen Anspruchs 9.

Rundballenpressen sind bekannt. Der Rundballen wird in einer Presskammer der Rundballenpresse während eines Pressvorgangs in Form gebracht. Dazu wird auf dem Boden liegendes Erntegut, beispielsweise Stroh, Gras oder Getreide, von einer Aufnahmeeinrichtung in die Presskammer gefördert und durch angeordnete Pressmittel in einen Rundballen geformt. Die Rundballenpresse kann ein Gehäuse umfassen, in welchem sich die Presskammer befinden kann. Das Gehäuse kann ein Gehäuseteil und/oder eine Auswurfklappe umfassen. Das Gehäuse kann ausserdem auf einem Fahrgestell angeordnet sein. Die Presskammer kann eines oder mehrere Pressmittel umfassen, die beispielsweise auf oder an dem Gehäuseteil und/oder der Auswurfklappe verteilt sein können und/oder die Presskammer umfangsseitig begrenzen. Mittels des Pressmittels ist eine rotationserzeugende oder rotationserhaltende Eingriffswirkung auf einen in der Ballenpresskammer befindlichen Rundballen erzeugbar. Darüber hinaus kann die Presskammer als größenunveränderliche oder feste Presskammer, insbesondere mit zylindrisch angeordneten Pressmitteln, beispielsweise Pressrollen oder Presswalzen, oder auch als größenveränderlichen oder variable Presskammer, mit variablen Pressmitteln, beispielsweise Pressriemen oder Pressketten oder Pressgurte, ausgebildet sein. Bei einer festen Presskammer können die Pressmittel als eine Vielzahl zueinander parallel verlaufender Pressrollen angeordnet sein. Die Rotationsachsen der Pressrollen können bei geschlossener Auswurfklappe auf einem Kreisbogen liegen und wenigstens eine der Pressrollen kann angetrieben sein. Die Anordnung der Pressrollen in der Presskammer kann einer Zylinderform entsprechen, sodass die Pressrollen zylindrisch um den Rundballen angeordnet sind und eine zylindrische Umfangsfläche ausbilden.

Ferner ist es bekannt, Rundballenpressen mit einer Umwicklungseinrichtung auszurüsten. Nach dem Ende eines Pressvorgangs, also wenn der Rundballen die erforderliche Grösse erreicht hat, wird der fertig gepresste Rundballen mit der Umwicklungseinrichtung mit einem Umwicklungsmaterial, beispielsweise Netz oder Garn, umwickelt und im Anschluss daran in gewickelter Form ausgeworfen werden. In einem dem Pressvorgang folgenden Umwicklungsvorgang wird von der Umwicklungseinrichtung das Umwicklungsmaterial, insbesondere eine erste Folie, in Richtung des ausgeformten Rundballens in die Presskammer geführt und von der Außenseite des Rundballens mitgerissen. Die Rundballenpresse kann eine Zuführeinrichtung zum Einführen des Umwicklungsmaterials in die Presskammer und/oder eine Zufuhrstelle, an der das Umwicklungsmaterial der Presskammer zuführbar ist, und/oder die Umwicklungseinrichtung umfassen. Ebenso kann aber auch die Umwicklungseinrichtung, die Zuführeinrichtung und Zufuhrstelle umfassen. Die Zuführeinrichtung kann sich hierbei zumindest teilweise entlang der Breite der Presskammer erstrecken. Die Zuführeinrichtung, beispielsweise ein Vortriebselement oder eine Vortriebswalze, kann in einer Zuführbewegung das Umwicklungsmaterial von einem Vorrat, beispielsweise der Vorratsrolle, abziehen und an der Zufuhrstelle in die Presskammer einführen. Der Vorrat kann durch ein Anpresselement mit einer gewissen Vorspannkraft beaufschlagt sein, damit das Umwicklungsmaterial mit entsprechender Zugspannung um den Rundballen gewickelt werden kann. Der Vorrat kann am Fahrgestell oder am bzw. im Gehäuse ausgebildeten Vorratsraum gelagert sein. Die Umwicklungseinrichtung, insbesondere die Zuführeinrichtung, kann auch ein Andrückelement oder ein Leitelement umfassen, welches die erste Folie zu Beginn des Umwicklungsvorgangs an den Rundballen heranbringt und/oder andrückt, so dass die erste Folie durch diesen mitgenommen werden kann und auf diese Weise von dem Vorrat abgezogen wird. Durch den sich drehenden Rundballen wird das Umwicklungsmaterial um den Rundballen geführt, und anschliessend durch eine Schneideinrichtung vom Rundballen getrennt, bevor der Rundballen ausgeworfen bzw. auf den Boden abgelegt wird. Darüber hinaus kann die Umwicklungseinrichtung, insbesondere die Zuführeinrichtung, auch weitere Transport- oder Förderelemente zur Führung des Umwicklungsmaterials aufweisen.

Aus der EP 1 461 995 A2 ist eine Rundballenpresse mit einer Umwicklungseinrichtung zum Umhüllen eines Rundballens bekannt. Die Umwicklungseinrichtung weist einen Sensor auf, welcher ermittelt, ob auf einer Oberfläche des Rundballens Umwicklungsmaterial vorhanden ist. Ein der Erfindung zugrundeliegendes Problem wird darin gesehen, dass die bekannten Rundballenpressen, insbesondere die in der EP 1 461 995 A2 offenbarte Rundballenpresse, das Umwicklungsmaterial auf einer Oberfläche des Rundballens nicht erkennt und den Umwicklungsvorgang nicht rechtzeitig abbricht, sodass es so zu einem Aufstauen des Umwicklungsmaterials kommt. Hierbei kann sich das Umwicklungsmaterial beispielsweise um die Pressmittel oder die Zuführeinrichtung wickeln. Darüber hinaus sind die in den bekannten Rundballenpressen verwendeten Sensoren und Verfahren nicht ausreichend, um eine ordnungsgemässe Umwicklung auf der Oberfläche des Rundballens zu erkennen. Die US 8,434,289 B2 und US 2017/0006779 A1 offenbaren Ballenpressen mit einem Ultraschallsensor, mit welchem bestimmt wird, ob der Ballen richtig gewickelt ist oder nicht. Die EP 1 464 216 A1 offenbart ein Verfahren zum Verpacken von Silageballen. US 8,573,480 B2 offenbart einen Bankautomaten.

Die der Erfindung zugrundeliegende Aufgabe wird darin gesehen, eine Rundballenpresse und ein Erkennungsverfahren vorzuschlagen, durch welche die vorgenannten Probleme überwunden werden.

Diese Aufgabe wird durch eine Rundballenpresse mit den Merkmalen des Anspruchs 1 und ein Erkennungsverfahren zur Erkennung einer ersten Folie auf einer Oberfläche eines Rundballens mit den Merkmalen des Anspruchs 9 gelöst.

Die abhängigen Ansprüche beziehen sich auf besonders vorteilhafte Ausführungsformen der Erfindung.

Erfindungsgemäß wird eine Rundballenpresse mit einer Presskammer, in der ein Rundballen erzeugbar ist, vorgeschlagen. Die Rundballenpresse umfasst ausserdem eine Umwicklungseinrichtung, mit der ein fertig gepresster Rundballen in der Presskammer mit einer ersten Folie umhüllbar bzw. einwickelbar ist. Die Rundballenpresse weist weiter eine Zuführeinrichtung zum Einführen der ersten Folie in die Presskammer und eine Zufuhrstelle auf, an der die erste Folie der Presskammer zuführbar ist. Ausserdem umfasst die Rundballenpresse einen Ultraschallsensor, der an der Presskammer angeordnet ist, derart, dass mit dem Ultraschallsensor ermittelbar ist bzw. der Ultraschallsensor ermittelt, ob auf einer Oberfläche des Rundballens die erste Folie vorhanden ist. Im Speziellen umfasst die Rundballenpresse einen Ultraschallsensor, der an der Presskammer angeordnet ist, derart, dass mit dem Ultraschallsensor die Oberfläche des Rundballens abtastbar ist, wobei mit dem Ultraschallsensor ermittelbar ist, ob auf der Oberfläche des Rundballens die erste Folie vorhanden ist. Der Ultraschallsensor ist derart angeordnet und ausgestaltet, dass der Ultraschallsensor mit einer Flächennormalen der Oberfläche des Rundballens einen Ausrichtungswinkel von 85 ≤ β ≤ 10 Grad einschliesst, und ein Echo eines vom Ultraschallsensor ausgesendeten Ultraschallimpulses teilweise oder vollständig vom Rundballen in Richtung des Ultraschallsensors reflektierbar und vom Ultraschallsensor empfangbar ist, wenn auf der Oberfläche des Rundballens keine erste Folie vorhanden.

Der Ultraschallsensor empfängt also kein Echo des Ultraschallimpulses, wenn auf der Oberfläche des Rundballens die erste Folie vorhanden ist. Unter, der Ultraschallsensor empfängt kein Echo des Ultraschallimpulses kann verstanden werden, dass das Echo nur teilweise detektiert werden kann und/oder eine im Vergleich zur maximalen Intensität eine niedrige Intensität aufweist, beispielsweise eine Intensität innerhalb oder nur geringfügig oberhalb des Rauschpegels, oder die Intensität des Echos überhaupt nicht detektiert werden kann. Die Flächennormale und der Ultraschallsensor, insbesondere die Richtung, in die der Ultraschallsensor ausgerichtet ist, können einen Ausrichtungswinkel β von 85 ≤ β ≤ 10 Grad, bevorzugt von 85 ≤ β ≤ 55 Grad, im Speziellen von 85 ≤ β ≤ 75 Grad einschliessen. Bei diesem zweiten Modus zur Ermittlung der ersten Folie gilt: Ist auf der Oberfläche des Rundballens keine erste Folie vorhanden und ist der Ultraschallsensor im Bereich des Ausrichtungswinkels angeordnet, wird die vom Ultraschallsensor ausgesendete Ultraschallwelle bzw. der Ultraschallimpuls, teilweise oder vollständig vom Rundballen in Richtung des Ultraschallsensors reflektiert und der Ultraschallsensor empfängt ein Echo. Ist hingegen auf der Oberfläche des Rundballens erste Folie vorhanden und ist der Ultraschallsensor im Bereich des Ausrichtungswinkels angeordnet, wird die vom Ultraschallsensor ausgesendete Ultraschallwelle bzw. der Ultraschallimpuls, teilweise oder vollständig vom Rundballen, insbesondere von der ersten Folie, vom Ultraschallsensor wegreflektiert oder weggestreut und der Ultraschallsensor empfängt kein Echo. Der Ultraschallsensor kann also ein Ausgangssignal erzeugen, wenn kein Echo empfangen wird, da dann auf der Oberfläche der ersten Folie vorhanden ist. Die Massnahme hat den Vorteil, dass mit dem Ultraschallsensor sehr genau ermittelt werden kann, ob die erste Folie ordnungsgemäss auf der Oberfläche des Rundballens vorhanden bzw. angeordnet sind. Im Gegensatz zu bekannten Vorrichtungen und Verfahren, beispielsweise zur Detektion von Netz oder Garn, kann mit der erfindungsgemässen Rundballenpresse die erste Folie auf einer Oberfläche eines Rundballens mittels einer technisch und/oder konstruktiv einfachen Vorrichtung auf einfache Art und Weise ermittelt werden.

Die erste Folie kann eine Kunststofffolie, eine Folie aus Kunststoff sein und/oder eine Kunststoff umfassende oder mit Kunststoff beschichtete Folie sein. Die Folie kann auch eine Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein.

Der Ultraschallsensor kann an der Presskammer angeordnet, d.h. der Ultraschallsensor kann ausserhalb und/oder innerhalb der Presskammer angeordnet sein, bevorzugt ausserhalb und/oder innerhalb der Presskammer an der Presskammer fest oder lösbar befestigt sein. Der Ultraschallsensor kann in die Presskammer gerichtet sein, d.h. der Ultraschallsensor kann derart angeordnet sein, dass eine vom Ultraschallsensor emittierte Ultraschallwelle in die Presskammer gerichtet ist, insbesondere in Richtung der Oberfläche des Rundballens und/oder der ersten Folie gerichtet ist. Im Speziellen kann der Ultraschallsensor ausserhalb der Presskammer an einem Seitenelement, beispielsweise einer Seitenwand, der Rundballenpresse angeordnet sein, insbesondere fest oder lösbar befestigt sein. Der Ultraschallsensor kann aber auch ausserhalb der Presskammer an einem weiteren Seitenelement, beispielsweise einer weiteren Seitenwand, der Rundballenpresse angeordnet sein, insbesondere fest oder lösbar befestigt sein. Die Seitenelemente oder Seitenwände können insbesondere als eine rechte und linke Seitenwand ausgebildet sein und die Presskammer in eine Vorwärtsfahrtrichtung seitlich bzw. stirnseitig eines zu pressenden zylindrischen Rundballens begrenzen. Der Ultraschallsensor kann aber auch innerhalb der Presskammer an dem Seitenelement der Presskammer angeordnet sein, insbesondere fest oder lösbar befestigt sein. Der Ultraschallsensor kann aber auch zwischen den Pressmitteln oder innerhalb der Pressmittel und/oder an den Rundballen angrenzend und/oder zwischen dem Pressmittel und dem Seitenelement angeordnet, insbesondere befestigt sein. Der Ultraschallsensor kann aber auch an der Umwicklungseinrichtung und/oder der Zuführeinrichtung und/oder der Zufuhrstelle angeordnet und/oder befestigt sein, insbesondere kann der Ultraschallsensor am Andrückelement und/oder am Leitelement angeordnet und/oder befestigt sein. Im Speziellen können auch zwei oder mehrere Ultraschallsensoren vorgesehen sein, von denen zumindest ein Teil der Ultraschallsensoren ausserhalb und/oder zumindest ein Teil der Ultraschallsensoren innerhalb der Presskammer und/oder zumindest ein Teil oder alle am Pressmitteln und/oder an dem Seitenelement angeordnet sein können. Die zwei oder mehrere Ultraschallsensoren können in die Presskammer gerichtet sein.

Der Ultraschallsensor kann eine Ultraschallwelle, insbesondere einen Ultraschallimpuls, erzeugen bzw. emittieren und/oder eine von der Oberfläche des Rundballens und/oder der ersten Folie reflektierte Ultraschallwelle, also ein Echo des Ultraschallimpulses, empfangen bzw. detektieren. Unter ermittelbar oder der Ultraschallsensor ermittelt kann insbesondere verstanden werden, dass der Ultraschallsensor in Richtung der Oberfläche des Rundballens und/oder in Richtung der ersten Folie auf der Oberfläche des Rundballens eine Ultraschallwelle emittiert und ein oder kein Echo empfängt bzw. detektiert und/oder das Erzeugen eines Ausgangssignals, das signalisieren kann, ob auf der Oberfläche des Rundballens die erste Folie angeordnet ist. Unter abtastbar kann insbesondere verstanden werden, dass der Ultraschallsensor so an der Presskammer angeordnet ist, dass die Oberfläche des Rundballens oder die erste Folie einer Ultraschallwelle zugänglich ist und/oder das mit dem Ultraschallsensor ein Echo detektierbar ist. Der Ultraschallsensor kann dabei digitale oder analoge Ausgangssignale abgeben. Der Ultraschallsensor kann ausserdem das empfangene Echo auswerten, insbesondere die Amplitude und/oder die Energie des Echos, und das Ausgangssignal erzeugen, das insbesondere die Auswertung des Ultraschallimpulses und/oder des Echos darstellt.

Wesentlich für die Erfindung ist, dass es mit der erfindungsgemässe Rundballenpresse möglich ist zu ermitteln, ob die erste Folie auf einer Oberfläche des Rundballens vorhanden ist und/oder ob die erste Folie ordnungsgemäss auf der Oberfläche des Rundballens angeordnet ist bzw. ob der Umwicklungsvorgang des Rundballens ordnungsgemäß verläuft und sich die erste Folie nicht um Bauteile der Rundballenpresse wickelt oder sich ungewollt aufstaut. Ermittelt der Ultraschallsensor, dass keine erste Folie vorhanden ist, obwohl der Umwicklungsvorgang gestartet wurde, so kann der Umwicklungsvorgang abgebrochen werden und es kommt nicht zu einem weiteren Aufstauen und/oder Verstopfen mit der ersten Folie. Darüber hinaus kann der Ultraschallsensor auch für weitere Messungen verwendet werden, beispielsweise Laufzeitmessungen zur Grössenerkennung des Rundballens.

In Ausgestaltung der Erfindung umfasst die Rundballenpresse eine Ballenwickeleinrichtung zum Umhüllen bzw. Einwickeln des Rundballens mit einer zweiten Folie, wobei sich die Ballenwickeleinrichtung entlang einer Längsachse der Rundballenpresse an die Presskammer, insbesondere an eine Auswurföffnung, anschliesst. Die Ballenwickeleinrichtung kann also der Presskammer nachgeordnet sein, vorzugsweise in einem rückwärtigen Bereich der Rundballenpresse. Die Ballenwickeleinrichtung kann einen Rundballen nach Abschluss eines Pressvorgangs oder nach dem Umwicklungsvorgang von der Rundballenpresse übernehmen und den gepressten Rundballen, mit der zweiten Folie umhüllen. Die zweite Folie kann eine Kunststofffolie oder eine Folie aus Kunststoff sein und/oder eine Kunststoff umfassende oder mit Kunststoff beschichtete Folie sein. Die zweite Folie kann auch eine Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein. Die Ballenwickeleinrichtung kann als an die Rundballenpresse angehängte zusätzliche Baugruppe ausgebildet sein, insbesondere also eine Kombipresse bezeichneten Presse- /Wickelkombination sein, oder als integrierte Baugruppe mit der Rundballenpresse verbunden sein. Vorteilhafterweise kann der Rundballen somit mit zwei Folien, insbesondere zwei voneinander verschiedenen Folien, umwickelt werden. Dadurch, dass beide Umwicklungsmaterialien aus Kunststoff sind, kann ein aufwändiges Trennen der Umwicklungsmaterialien beim Entpacken vermieden werden.

In Ausgestaltung der Erfindung umfasst die Presskammer ein Seitenelement in dem eine Sensoröffnung ausgebildet ist und an der Sensoröffnung ist ein Abschirmelement derart angeordnet, dass kein Erntegut aus der Presskammer an und/oder in die Sensoröffnung gelangt und/oder die Sensoröffnung mittels Erntegut aus der Presskammer nicht blockiert werden kann und/oder Erntegut den Ultraschallsensor verschmutzt. Die Presskammer kann auch zwei Seitenelemente umfassen, die als rechte und linke Seitenwand ausgebildet sind, in denen eine oder mehrere Sensoröffnungen ausgebildet sein können. Das Abschirmelement ermöglicht es also, dass der Ultraschallsensor ungestört vom Erntegut eine Ultraschallwelle von ausserhalb der Presskammer in die Presskammer emittieren kann und/oder ein Echo vom Ultraschallsensor detektiert werden kann. Der Ultraschallsensor kann beispielsweise durch die Sensoröffnung, beispielsweise ein Loch oder eine Bohrung, in der oder den Seitenelementen in Richtung der Oberfläche des Rundballens und/oder der ersten Folie ausgerichtet sein, sodass eine emittierte Ultraschallwelle von ausserhalb der Presskammer in die Presskammer emittiert und/oder ein Echo detektiert werden kann. Das Abschirmelement kann an der Presskammer, insbesondere am Seitenelement oder der Seitenwand oder aber am Rahmen oder dergleichen, angeordnet, insbesondere fest oder lösbar befestigt sein. Das Abschirmelement kann beispielsweise ein Blech oder ein Ablenkblech sein. Das Abschirmelement kann derart an der Sensoröffnung angeordnet sein, dass vorteilhafterweise verhinderbar ist, dass das Erntegut an oder in die Sensoröffnung gelangt und/oder diese blockiert und/oder dort sammelt. Von Vorteil kann ausserdem eine Verschmutzung des Ultraschallsensors mit Erntegut verhindert werden.

In Ausgestaltung der Erfindung ist der Ultraschallsensor an einem Halteelement angeordnet, insbesondere fest oder lösbar befestigt oder befestigbar, und das Halteelement ist an der Presskammer fest oder lösbar befestigt oder befestigbar, insbesondere ausserhalb oder innerhalb der Presskammer an dem Seitenelement oder der Seitenwand. Der Ultraschallsensor kann mittels des Haltelements derart angeordnet, insbesondere ausgerichtet sein, dass eine vom Ultraschallsensor ausgesendete Ultraschallwelle bzw. der Ultraschallimpuls in die Presskammer auf den Rundballen und/oder die erste Folie gerichtet ist und/oder ein Echo empfangen werden kann. Das Halteelement kann ein L-förmiges und/oder ein- oder zweistückiges oder mehrstückiges Bauteil sein. Der Ultraschallsensor kann mittels des Halteelements von der Presskammer, bevorzugt vom Seitenelement, besonders bevorzugt zur Sensoröffnung, beabstandet angeordnet werden, insbesondere mit einem vorgebbaren Abstand angeordnet sein. Vorteilhafterweise kann der Ultraschallsensor mittels des Halteelements also auf eine einfache Art und Weise beabstandet und/oder demontiert und/oder ausgetauscht werden. Darüber hinaus kann vorteilhafterweise verhindert werden, dass dadurch, dass der Ultraschallsensor mittels des Halteelements mit einem Abstand zum Seitenelement und/oder der Sensoröffnung abgeordnet ist, von Erntegut aus der Presskammer verschmutzt und/oder blockiert wird.

In Ausgestaltung der Erfindung sind zwei oder mehrere Ultraschallsensoren vorgesehen. Bevorzugt können zwei bis sechs Ultraschallsensoren, im Speziellen zwei oder drei oder vier oder fünf oder sechs Ultraschallsensoren, am oder in der Presskammer angeordnet sein und/oder in die Presskammer gerichtet sein. Die Ultraschallsensoren können auch an der Rundballenpresse, insbesondere an der Umwicklungseinrichtung und/oder der Zuführeinrichtung und/oder der Zufuhrstelle angeordnet und/oder befestigt sein, insbesondere können die Ultraschallsensoren am Andrückelement und/oder am Leitelement angeordnet und/oder befestigt sein. Die Ultraschallsensoren können nebeneinander oder benachbart und/oder in einer Reihe angeordnet sein. Ebenso können sich Ultraschallsensoren entlang der Breite der Presskammer erstrecken und/oder auf die Umfangsfläche des Rundballens ausgerichtet sein und/oder auf die Grundfläche des Rundballens ausgerichtet sein. Auch können, wenn zwei oder mehrere Ultraschallsensoren vorhanden sind, der erste und zweite Modus kombiniert zum Einsatz kommen, sodass genauer und besser erkannt werden kann, die erste Folie ordnungsgemäss auf dem Rundballen aufgebracht wurde. Sind zwei oder mehrere Ultraschallsensoren vorhanden, kann vorteilhafterweise gleichzeitig an mehreren Stellen am Rundballen ermittelt werden, ob die erste Folie ordentlich auf der Oberfläche des Rundballens angeordnet ist. Ausserdem ist die Rundballenpresse wenige anfällig gegen den Ausfall eines der Ultraschallsensoren, da die verbliebenen Ultraschallsensoren ausreichen, um zu erkennen, ob die erste Folie ordnungsgemäss auf der Oberfläche des Rundballens angeordnet ist. Im Speziellen kann ein erster Ultraschallsensor stromabwärts und ein zweiter Ultraschallsensor stromaufwärts der Zufuhrstelle angeordnet sein. Ist sowohl stromabwärts als auch stromaufwärts der Hüllbahnzufuhrstelle ein Ultraschallsensor vorgesehen, so können die o.g. Vorteile kombiniert werden und sowohl festgestellt werden, ob der Umwicklungsvorgang ordnungsgemäss begonnen hat, als auch, ob die erste Folie auf dem Rundballen aufgebracht wurde.

In Ausgestaltung der Erfindung ist eine Zufuhr der ersten Folie und/oder eine Rotation des Rundballens in Abhängigkeit von einem Ausgangssignal des Ultraschallsensors einstellbar ist. Ausserdem umfasst die Rundballenpresse eine Steuereinheit und der Ultraschallsensor ist mit der Steuereinheit signalverbunden. Unter einstellbar oder einstellen kann dabei Steuern und/oder Regeln und/oder das Einstellen eines Bauteils des Rundballenpresse mittels der Stelleinrichtung und/oder des Aktors verstanden werden. Der Ultraschallsensor kann also mit der vorzugsweise elektrischen oder elektronischen Steuereinheit (engl. ECU = electronic control unit oder ECM = electronic control module), die ein elektronisches Modul und/oder ein eingebettetes System sein kann, zusammenwirken, insbesondere mit der Steuereinheit einstellbar sein. Steuereinheiten können an Rundballenpressen oder an Fahrzeugen, durch welche Rundballenpressen gezogen werden, bereits vorgesehen sein, beispielsweise um die Rundballenpresse einzustellen bzw. weitere Funktionen der Rundballenpresse einzustellen. Im Speziellen ist die Steuereinheit auch derart ausgestaltet, dass das unten beschriebene Erkennungsverfahren mit der Rundballenpresse ausgeführt werden kann. Der Ultraschallsensor kann also der Steuereinheit das Ausgangssignal zusenden und/oder ein Sollwert von der Steuereinheit empfangen und/oder ist mittels der Steuereinheit einstellbar. Im Weiteren kann mittels der Steuereinheit das Ausgangssignal des Ultraschallsensors empfangen und/oder verarbeitet werden, insbesondere kann der Umwicklungsvorgang bei einer Fehlfunktion mittels der Steuereinheit automatisch abgebrochen werden. Dabei kann das Ausgangssignal ein Istwert sein, der mit dem Ultraschallsensor detektiert wurde, und mittels der Steuereinheit mit einem Sollwert verglichen werden. Ebenso kann mittels der Steuereinheit der Sollwert am Ultraschallsensor eingestellt werden und mittels des Ultraschallsensors mit dem Sollwert verglichen werden. Die Steuereinheit kann auch zusätzlich mit der einen oder mehreren Stelleinrichtungen und/oder Aktoren der Rundballenpresse signalverbunden sein, sodass die Stelleinrichtung und/oder der Aktor mit der Steuereinheit einstellbar ist, diese insbesondere mittels eines Steuersignals, das die Steuereinheit an die Stelleinrichtung und/oder der Aktor sendet, einstellbar sind. Die Steuereinheit und/oder der Ultraschallsensor und/oder die Stelleinrichtung und/oder der Aktor können mittels eines Kabels oder Drahts oder aber drahtlos, also beispielsweise mittels Funk, miteinander verbunden werden, wobei der Kommunikationsbus Isobus, CAN-Bus oder ähnliches sein kann. Die Steuereinheit ermöglicht auch ein Einbeziehen einer zeitlichen Komponente, beispielsweise in der Art, dass das Ausgangssignal nach einem vorgegebenen Zeitintervall nach dem Start des Umwicklungsvorgangs ermittelt wird. Das Zeitintervall ist dabei derart zu wählen, dass bei einer ordnungsgemäßen Funktion damit zu rechnen ist, dass auf dem Rundballen an der betrachteten Stelle die erste Folie aufgebracht ist. Hierbei kann auch die Rotationsgeschwindigkeit des Rundballens bzw. dessen Drehzahl in Betracht gezogen werden.

In Abhängigkeit vom durch den Ultraschallsensor gelieferten Ausgangssignal kann mittels der Steuereinheit die Rundballenpresse, insbesondere die Stelleinrichtung und/oder der Aktor, eingestellt werden bzw. derart einstellbar sind, sodass eine Rotation des Rundballens und/oder die Zufuhr der ersten Folie zum Rundballen eingestellt werden. Im Speziellen, kann für den Fall, dass ermittelt wurde, dass der Umwicklungsvorgang nicht ordnungsgemäß durchgeführt wird, die Rotation des Rundballens und/oder die Zufuhr der ersten Folie zum Rundballen gestoppt werden und/oder keine weitere erste Folie von dem Vorrat abgezogen wird. Die Stelleinrichtung und/oder der Aktor können an der Rundballenpresse, insbesondere an der Umwicklungseinrichtung und/oder der Zuführeinrichtung, vorgesehen sein. Durch das Ausgangssignal kann beispielsweise auch eine Anzeige oder eine optische und/oder akustische Warnanzeige aktiviert werden, die einer Bedienungsperson eine Fehlfunktion der Umhüllungsfunktion anzeigt, so dass diese die Umwicklungsphase unterbrechen kann. Somit kann ein fehlerhaftes Umwickeln des Rundballens rechtzeitig erkannt und unterbrochen werden. Die Bedienung der Rundballenpresse wird dadurch vereinfacht und die Unterbrechungszeit durch eine fehlerhafte Umwicklung verkürzt.

In Ausgestaltung der Erfindung handelt es sich bei der Oberfläche zumindest um eine Umfangsfläche des Rundballens. Der Ultraschallsensor kann also auf die Umfangsfläche des Rundballens gerichtet sein. Es kann aber auch ein Ultraschallsensor vorgesehen sein, der ermittelt, ob auch die Seitenflächen des Rundballens mit der ersten Folie bedeckt sind. Weiter kann ein Ultraschallsensor vorgesehen sein, der auf einen Kantenbereich des Rundballens gerichtet ist, und beispielsweise ermittelt, ob sich die erste Folie über eine entsprechende Kante des Rundballens legt.

In Ausgestaltung der Erfindung können die erste und zweite Folie voneinander verschieden sein, insbesondere kann die erste Folie ein kleineres Elastizitätsmodul als die zweite Folie aufweisen. Somit ist die erste Folie, welche den Rundballen zusammenhält, stabiler als die zweite Folie, die den Rundballen vor Umwelteinflüssen schütz.

Die Erfindung betrifft weiter ein Erkennungsverfahren zur Erkennung einer ersten Folie, insbesondere auch der zweiten Folie, auf einer Oberfläche eines Rundballens. Das Erkennungsverfahren umfasst eine Rundballenpresse, insbesondere nach einem der Ansprüche 1 bis 8, mit einer Presskammer, in der ein Rundballen erzeugt wird, und eine Umwicklungseinrichtung, mit der ein fertig gepresster Rundballen in der Presskammer mit der ersten Folie umhüllt wird, und eine Zuführeinrichtung mit der die ersten Folie an einer Zufuhrstelle in die Presskammer eingeführt wird. Im Weiteren umfasst die Rundballenpresse einen Ultraschallsensor, der an der Presskammer angeordnet ist, derart, dass mit dem Ultraschallsensor ermittelt wird, ob auf der Oberfläche des Rundballens die erste Folie vorhanden ist. Der Ultraschallsensor ist derart angeordnet und ausgestaltet, dass der Ultraschallsensor mit einer Flächennormalen der Oberfläche des Rundballens einen Ausrichtungswinkel von 85 ≤ β ≤ 10 Grad einschliesst, und ein Echo eines vom Ultraschallsensor ausgesendeten Ultraschallimpulses teilweise oder vollständig vom Rundballen in Richtung des Ultraschallsensors reflektiert und vom Ultraschallsensor empfangen wird, wenn auf der Oberfläche des Rundballens keine erste Folie vorhanden. Das Erkennungsverfahren ist insbesondere mit einer Rundballenpresse nach einem der Ansprüche 1 bis 8 durchführbar. Das erfindungsgemässe Erkennungsverfahren weist die oben beschriebenen Vorteile der erfindungsgemässen Rundballenpresse auf.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: ein erstes Ausführungsbeispiel einer erfindungsgemässen Rundballenpresse, und
- Fig. 2: ein zweites Ausführungsbeispiel der erfindungsgemässen Rundballenpresse, und
- Fig. 3a: eine schematische Darstellung eines Ultraschallsensors, der senkrecht zur Oberfläche eines Rundballens ohne erste Folie angeordnet ist, und
- Fig. 3b: eine schematische Darstellung des Ultraschallsensors, der senkrecht zur Oberfläche des Rundballens mit erster Folie angeordnet ist, und
- Fig. 4a: eine schematische Darstellung des Ultraschallsensors, der mit der Flächennormalen der Oberfläche des Rundballens einen Ausrichtungswinkel einschliesst, wobei auf der Oberfläche des Rundballens keine erste Folie angeordnet ist, und
- Fig. 4b: eine schematische Darstellung des Ultraschallsensors, der mit der Flächennormalen der Oberfläche des Rundballens einen Ausrichtungswinkel einschliesst, wobei auf dem Rundballen eine erste Folie angeordnet ist, und
- Fig. 5: eine schematische Darstellung der Anordnungsmöglichkeiten des oder der Ultraschallsensoren an der erfindungsgemässen Rundballenpresse, und
- Fig. 6: eine schematische Darstellung eines dritten Ausführungsbeispiels der erfindungsgemässen Rundballenpresse, und
- Fig. 7: eine schematische Darstellung eines vierten Ausführungsbeispiels der erfindungsgemässen Rundballenpresse, und
- Fig. 8: eine schematische Darstellung eines fünften Ausführungsbeispiels der erfindungsgemässen Rundballenpresse.

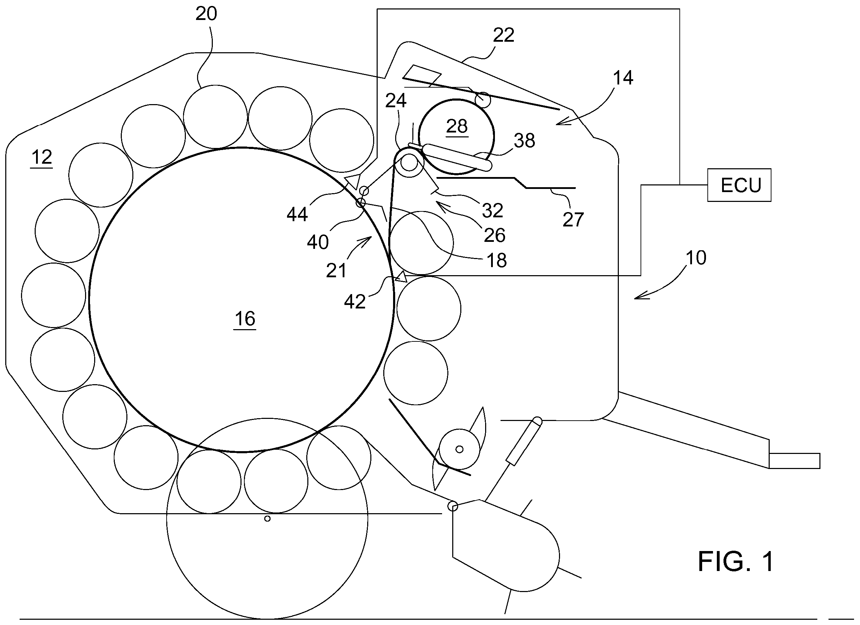

Figur 1 zeigt eine schematische Darstellung eines ersten Ausführungsbeispiels der erfindungsgemässen Rundballenpresse 10 mit einer Presskammer 12, in der ein Rundballen 16 erzeugbar ist, und einer Umwicklungseinrichtung 14, mit der ein in der Presskammer 12 gebildeter Rundballen 16 mit einer ersten Folie 18 umhüllbar ist. Bei der Rundballenpresse 10 kann es sich um eine bekannte Bauart handeln, d.h. mit einer Presskammer 12 konstanter oder variabler Größe, welcher ausschließlich oder in Kombination von Pressmitteln, beispielsweise Riemen, Ketten, oder wie in dem Ausführungsbeispiel von Pressrollen bzw. Presswalzen 20 umgeben wird. Eine derartige Rundballenpresse 10 kann in der Landwirtschaft zum Bilden von Rundballen 16 aus Erntegut, wie z.B. Stroh, Heu oder Gras eingesetzt werden. Es ist aber auch eine Verwendung in industriellen Bereichen denkbar.

Die Umwicklungseinrichtung 14 ist in der vorliegenden Ausführungsform an der Vorderseite der Rundballenpresse 10 vorgesehen, kann aber auch in einem mittleren Bereich der Rundballenpresse 10 oder auch vor oder oberhalb der Presskammer 12 angeordnet sein. Die Rundballenpresse 10, insbesondere die Umwicklungseinrichtung 14, weist eine Zuführeinrichtung 24 zum Einführen der ersten Folie 18 in die Presskammer 12, und eine Zufuhrstelle 21 auf, an der die erste Folie 18 der Presskammer 12 zuführbar ist. Die erste Folie 18 wird durch einen Spalt zwischen zwei benachbarten Presswalzen 20 hindurch, also der Zufuhrstelle 21, der Presskammer 12 zugeführt, wo sie von dem in Drehung versetzten Rundballen 16 mitgenommen wird. Mittels der ersten Folie 18 wird der Rundballen 16 gebunden und somit daran gehindert, nach einem Verlassen der Rundballenpresse 10 auseinander zu fallen. Die Umwicklungseinrichtung 14 umfasst ausserdem ein Gehäuse 22 sowie ein beispielsweise als Vortriebswalze ausgebildetes Vortriebselement und eine Trenneinrichtung 26. Das Gehäuse 22 enthält einen Fachboden 27, auf welchem die erste Folie 18 als Vorratsrolle 28 gelagert wird. Der Fachboden 27 kann auch derart ausgebildet sein, dass er mehrere Vorratsrolle 28 bevorratet und/oder Stufen oder Mulden zu deren Lagesicherung aufweist.

Das Vortriebselement und/oder die Zuführeinrichtung 24 sind auf seiner Umfangsfläche mit einem Belag hohen Reibwerts versehen und können in Drehung versetzt werden. Die Drehung hilft anfänglich, die erste Folie 18 von der Vorratsrolle 28 abzuziehen und während des Umwicklungsvorgangs infolge einer gebremsten Drehbewegung in ihr eine Spannung aufzubauen. Die Vorratsrolle 28 befindet sich oberhalb der Auflageebene des Fachbodens 27 und kommt in ihrer Betriebsstellung mit einem Bereich, der etwa einer 6 bis 9 Uhr Stellung entspricht, an der Zuführeinrichtung 24 zur Anlage. Durch die Zuführeinrichtung 24 wird die erste Folie 18 von der Vorratsrolle 28 abgezogen und durch die Zufuhrstelle 21 zwischen den benachbarten Presswalzen 20 in den Presskammer 12 geführt. Bei einem ordnungsgemäßen Betrieb wird die erste Folie 18 von dem rotierenden Rundballen 16 erfasst und hüllt diesen ein.

Die Trenneinrichtung 26 weist ein Messer 32 auf, welches schwenkbar befestigt ist, um in den Weg der ersten Folie 18 einzutreten und diese zu durchtrennen bzw. ein Abreißen zu bewirken, wenn der Umwicklungsvorgang abgeschlossen ist. Ein Verschwenken des Messers 32 erfolgt über eine Stelleinrichtung, einen Hydraulikmotor 38, welcher mittels einer Steuereinheit ECU betätigt wird. Im vorliegenden Ausführungsbeispiel ist darüber hinaus eine Leiteinrichtung oder Leitelement 40 schwenkbar vorgesehen, die die erste Folie 18 an den Rundballen 16 heranführt.

Darüber hinaus ist an bzw. in der Presskammer 12 eine nicht erfindungsgemässe Anordnung des Ultraschallsensor 44 im Bereich zwischen den Presswalzen 20 an den Rundballen 16 angrenzend vorgesehen. Der Ultraschallsensor 44 ist stromaufwärts der Hüllbahnzufuhrstelle 21 bzw. in einem hinter Hüllbahnzufuhr liegenden Bereich angeordnet. Der Ultraschallsensor 44 ermittelt, ob der Rundballen 16 an der jeweiligen Stelle mit der ersten Folie 18 umhüllt ist oder ob, beispielsweise in Folge einer Fehlfunktion oder eines Mangels an erster Folie 18 auf der Vorratsrolle 28 keine Umhüllung des Rundballens 16 mit der ersten Folie 18 erfolgt ist.

Die Rundballenpresse 10 umfasst die Steuereinheit ECU und der Ultraschallsensor 44 ist mit der Steuereinheit ECU signalverbunden. Der Ultraschallsensor 44 kann der Steuereinheit ECU ein Ausgangssignal übermittelt, welches durch diese verarbeitet werden kann, sodass mit der Steuereinheit ECU der Vorgang des Umhüllens des Rundballens 16 mit der ersten Folie 18 gesteuert und/oder geregelt werden kann. Darüber hinaus ist in der Presskammer auch ein weiterer oder zweiter Ultraschallsensor 42 vorgesehen, der nicht erfindungsgemäss stromabwärts der Stelle der Zufuhrstelle 21, beispielsweise im Bereich der Gutzufuhr vorgesehen sein kann. Der zweite Ultraschallsensor 42 kann ebenfalls mit der Steuereinheit ECU signalverbunden sein.

Im Folgenden soll auf die Funktionsweise der Rundballenpresse genauer eingegangen werden. Ist die Bildung des Rundballens 16 in dem Presskammer 12 abgeschlossen, was in bekannter Art und Weise durch einen nicht dargestellten Sensor, welcher beispielsweise mechanisch oder optisch die Dicke des Rundballens 16 bestimmt, ermittelt wird, wird die Umwicklungseinrichtung 14 aktiviert. Dies geschieht, indem der Hydraulikmotor 38 von der Steuer- bzw. Regeleinrichtung ECU angesteuert, in seine in der Figur dargestellte, eingefahrene Stellung gebracht wird. In dieser Stellung wird die Zuführeinrichtung 24 in Rotation versetzt. Die Zuführeinrichtung 24 zieht nun die erste Folie 18 von der Vorratsrolle 28 ab. Die erste Folie 18 gelangt zwischen den Presswalzen 20 an den Rundballen 16 heran, wobei sie hierbei durch die Leiteinrichtung 40 unterstützt wird. Bei einer ordnungsgemäßen Funktion der Umwicklungseinrichtung 14 wird die erste Folie 18 durch den Rundballen 16 erfasst und mitgenommen, wodurch sich der Rundballen 16 selbsttätig durch seine Rotation mit erster Folie 18 umhüllt.

Mit dem Ultraschallsensor 44 kann bestimmt werden, ob der Rundballen 16 vollständig mit einer ersten Lage der ersten Folie 18 umhüllt wurde. Trifft dies zu, so wird der Umwicklungsvorgang fortgesetzt. Das Ende des Vorgangs wird dann in üblicher Art und Weise, beispielsweise nach einer vorgegebenen Zeitdauer oder durch ein Bestimmen einer vorgegebenen Länge der ersten Folie 18 bestimmt. Hierbei kann vorgesehen sein, dass die Länge der ersten Folie 18 ebenfalls durch den Ultraschallsensor 44, wie dies zuvor beschrieben wurde, ermittelt wird oder auch, dass ein weiterer Sensor etc. vorgesehen ist, der beispielsweise die Umdrehungszahl des Rundballens oder des Vorrats aufnimmt. Wird durch den Ultraschallsensor 44 festgestellt, dass auf dem Rundballen 16 keine erste Folie 18 vorhanden ist, so wird ein entsprechendes Ausgangssignal an die Steuereinheit ECU übermittelt. Diese kann nun den Umwicklungsvorgang abbrechen und beispielsweise bewirken, dass der Rundballen 16 nicht länger rotiert oder durch die Zuführeinrichtung 24 keine weitere erste Folie 18 von der Vorratsrolle 28 abgezogen wird. Der zweite Ultraschallsensor 42 ist stromaufwärts der Zufuhrstelle 21 angeordnet und kann ermitteln, ob auf dem Rundballen 16 die erste Folie 18 vorhanden ist und der Umwicklungsvorgang ordnungsgemäß verläuft. Wird durch den zweiten Ultraschallsensor 42 erkannt, dass keine erste Folie 18 auf dem Rundballen 16 vorhanden ist, so liefert der zweite Ultraschallsensor 42 ebenfalls ein entsprechendes Ausgangssignal an die Steuereinheit ECU, die gemäß eines Ausgangssignals des Ultraschallsensors 44 verfährt. Nach einem ordnungsgemäßen Abschluss des Umwicklungsvorgangs wird die erste Folie 18 durch die Trenneinrichtung 26 durchtrennt und der umhüllte Rundballen 16 kann aus dem Presskammer 12 der Rundballenpresse 10 in üblicher Art und Weise ausgestoßen werden.

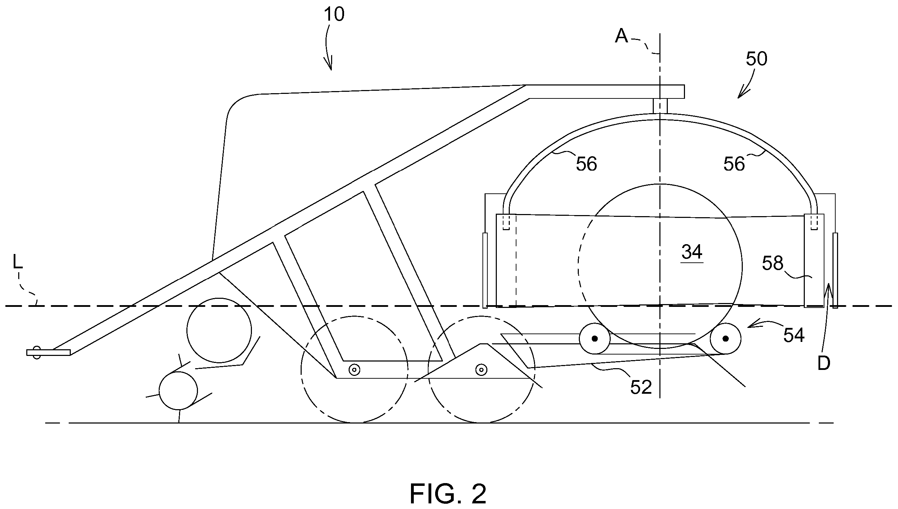

Figur 2 zeigt eine schematische Darstellung eines zweiten Ausführungsbeispiels einer erfindungsgemässen Rundballenpresse 10. Die in Figur 2 gezeigte Rundballenpresse 10 entspricht im Wesentlichen der in Figur 1 gezeigten Rundballenpresse 10, sodass im Folgenden lediglich auf die Unterschiede eingegangen wird. Die Ballenwickeleinrichtung 54 zum Umhüllen des Rundballens 16 mit einer zweiten Folie 58 weist einen Rahmen 52, einen Wickeltisch bzw. eine Aufnahmevorrichtung 54, zur Aufnahme des zu umhüllenden Rundballens 16, sowie Wickelarme 56 auf, die zur Umhüllung des Rundballens 16 mit einer zweiten Folie 58, beispielsweise Folie aus Kunststoff, mittels eines nicht gezeigten, geeigneten Antriebs um eine Achse A in Bewegung versetzt werden können. Die Ballenwickeleinrichtung 54 schliesst sich entlang einer Längsachse L der Rundballenpresse 10 an eine Auswurföffnung an die Presskammer 12 an und ist der Presskammer 12 nachgeordnet, vorzugsweise in einem rückwärtigen Bereich.

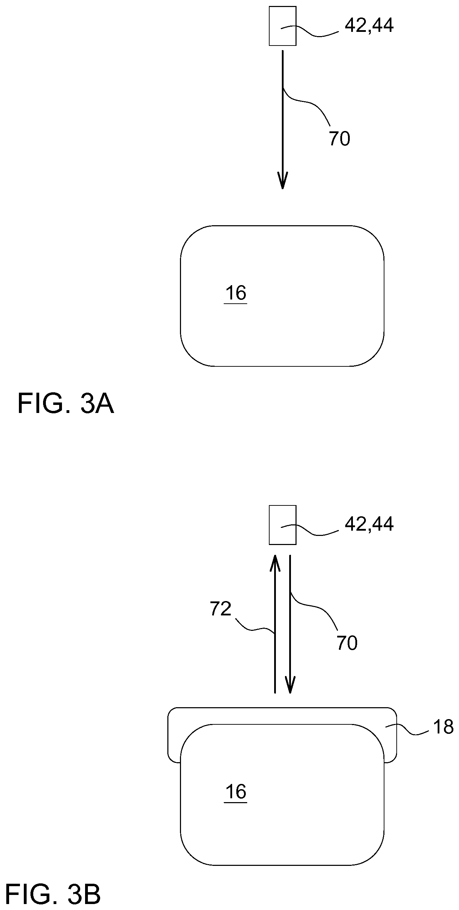

Die Figur 3a zeigt eine schematische Darstellung einer nicht erfindungsgemässen Anordnung eines Ultraschallsensors 42, 44, der senkrecht zur Oberfläche eines Rundballens angeordnet ist. Die in den Figuren 1 und 2 gezeigten Rundballenpresse 10, kann den in Figur 3a gezeigten Ultraschallsensor 42, 44 umfassen, sodass im Folgenden lediglich auf die Unterschiede eingegangen wird. Die Oberfläche des in Figur 3a gezeigten Rundballen 16 ist nicht mit der ersten Folie 18 bedeckt. Der Ultraschallsensor 42, 44 ist senkrecht, insbesondere im Bereich des Detektionswinkels, angeordnet und derart ausgestaltet ist, dass der Ultraschallsensor 42, 44 einen Ultraschallimpuls 70 aussendet und ein Echo 72 des Ultraschallimpulses 70 empfängt, wenn auf der Oberfläche des Rundballens 16 die erste Folie 18 vorhanden ist.

Die Flächennormale und der Ultraschallsensor 42, 44, insbesondere die Richtung in die der Ultraschallsensor 42, 44 zur Ermittlung der ersten Folie 18 ausgerichtet ist, schliessen den Detektionswinkel von 0 Grad ein. Die vom Ultraschallsensor 42, 44 ausgesendete Ultraschallwelle bzw. der Ultraschallimpuls 70 wird teilweise oder vollständig vom Rundballen 16 absorbiert, derart, dass der Ultraschallsensor 42, 44 kein Echo empfängt bzw. detektiert.

Die Figur 3b zeigt eine schematische Darstellung einer nicht erfindungsgemässen Anordnung eines Ultraschallsensors 42, 44, der senkrecht zur Oberfläche eines Rundballens angeordnet ist. Die in den Figuren 1 und 2 gezeigte Rundballenpresse 10, kann den in Figur 3b gezeigten Ultraschallsensor 42, 44 umfassen, der ausserdem dem in Figur 3a gezeigten Ultraschallsensor entspricht, sodass im Folgenden lediglich auf die Unterschiede eingegangen wird. Die Oberfläche des in Figur 3b gezeigten Rundballens 16 ist mit der ersten Folie 18 bedeckt. Die vom Ultraschallsensor 42, 44 ausgesendete Ultraschallwelle bzw. der Ultraschallimpuls 70 wird teilweise oder vollständig von der ersten Folie 18 auf der Oberfläche des Rundballens 16 reflektiert. Daher empfängt bzw. detektiert der Ultraschallsensor 42, 44 ein Echo 72, also eine reflektierte Ultraschallwelle 72.

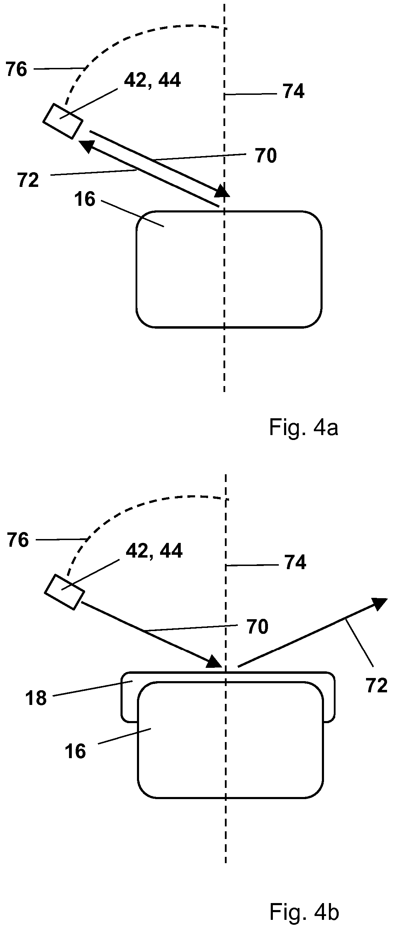

Figur 4a zeigt eine schematische Darstellung einer erfindungsgemässen Anordnung eines Ultraschallsensors 42, 44, der derart angeordnet und ausgestaltet ist, dass der Ultraschallsensor 42, 44 mit der Flächennormalen 74 der Oberfläche des Rundballens 16 einen Ausrichtungswinkel β (Bezugszeichen 76) einschliesst und kein Echo 72 des Ultraschallimpulses 70 empfängt, wenn auf der Oberfläche des Rundballens 16 die erste Folie 18 vorhanden ist. Die in den Figuren 1 und 2 gezeigten Rundballenpresse 10, kann den in Figur 4a gezeigten Ultraschallsensor 42, 44 umfassen, sodass im Folgenden lediglich auf die Unterschiede eingegangen wird. Die Oberfläche des in Figur 4a gezeigten Rundballen 16 ist nicht mit der ersten Folie 18 bedeckt. Die Flächennormale 74 und der Ultraschallsensor 42, 44, insbesondere die Richtung in die der Ultraschallsensor 42, 44 zur Ermittlung der ersten Folie 18 ausgerichtet ist, schliessen den Ausrichtungswinkel 76 ein, in Figur 4a einen Ausrichtungswinkel von ca. 60 Grad. Die vom Ultraschallsensor 42, 44 ausgesendete Ultraschallwelle 70 bzw. der Ultraschallimpuls 70 wird teilweise oder vollständig vom Rundballen 16 gestreut und/oder reflektiert, insbesondere in Richtung des Ultraschallsensors 42, 44, und zwar derart, dass der Ultraschallsensor 42, 44 ein Echo 72 empfängt bzw. detektiert.

Figur 4b zeigt eine schematische Darstellung einer erfindungsgemässen Anordnung des Ultraschallsensors 42, 44, der derart angeordnet und ausgestaltet ist, dass der Ultraschallsensor 42, 44 mit der Flächennormalen 74 der Oberfläche des Rundballens 16 einen Ausrichtungswinkel 76 einschliesst. Die in den Figuren 1 und 2 gezeigte Rundballenpresse 10, kann den in Figur 4b gezeigten Ultraschallsensor 42, 44 umfassen, der dem in Figur 4a gezeigten Ultraschallsensor entspricht, sodass im Folgenden lediglich auf die Unterschiede eingegangen wird. Die Oberfläche des in Figur 4b gezeigten Rundballen 16 ist mit der ersten Folie 18 bedeckt. Die Flächennormale und der Ultraschallsensor 42, 44, insbesondere die Richtung in die der Ultraschallsensor 42, 44 zur Ermittlung der ersten Folie 18 ausgerichtet ist, schliessen den Ausrichtungswinkel 76 gemäss Figur 4a ein. Die vom Ultraschallsensor 42, 44 ausgesendete Ultraschallwelle 70 bzw. der Ultraschallimpuls 70 wird teilweise oder vollständig von der ersten Folie 18 auf der Oberfläche des Rundballens 16 reflektiert, insbesondere vom Ultraschallsensor 42, 44 wegreflektiert oder weggestreut. Daher empfängt bzw. detektiert der Ultraschallsensor 42, 44 kein Echo 72, also keine von der ersten Folie 18 reflektierte Ultraschallwelle 72.

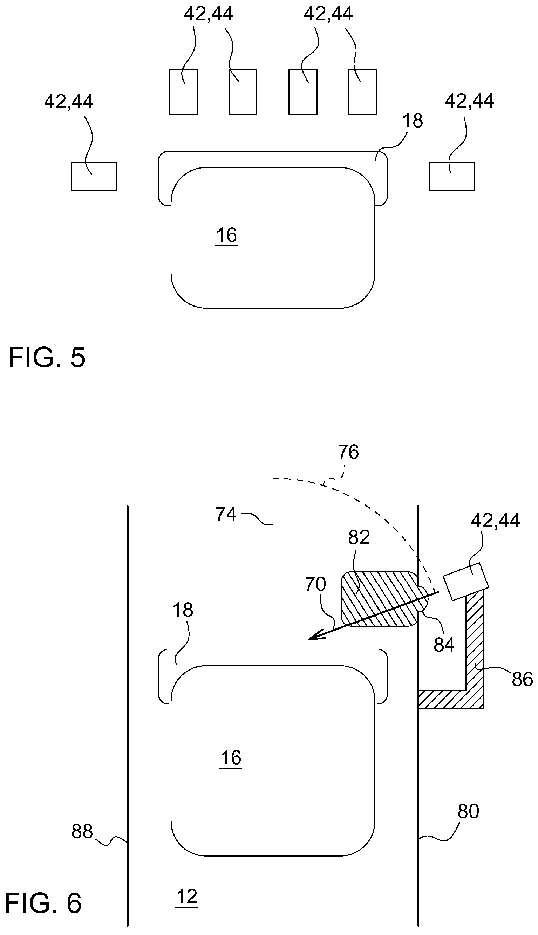

Figur 5 zeigt eine schematische Darstellung der nicht erfindungsgemässen Anordnungsmöglichkeiten des oder der Ultraschallsensoren 42, 44 an der erfindungsgemässen Rundballenpresse 10. Die in den Figuren 1 und 2 gezeigte Rundballenpresse 10, kann die in Figur 5 gezeigten Anordnungsmöglichkeiten der Ultraschallsensoren 42, 44 umfassen. Ausserdem können die Ultraschallsensoren 42, 44 die in den Figuren 3a, 3b, 4a und 4b gezeigten Modi aufweisen. Aus diesem Grund wird im Folgenden lediglich auf die Unterschiede zu den vorherigen Figuren eingegangen. Figur 5 zeigt sechs Ultraschallsensoren 42, 44, die an bzw. um einen Rundballen 16 angeordnet sind, auf dessen Oberfläche eine erste Folie 18 angeordnet ist. Die Ultraschallsensoren 42, 44 sind derart angeordnet und ausgerichtet, dass diese eine Ultraschallwelle 70 auf den Rundballen 16 oder auf eine auf der Oberfläche des Rundballens 16 angeordnete erste Folie 18 senden und/oder eine reflektierte Ultraschallwelle, das Echo 72, empfangen können. Vier der Ultraschallsensoren 42, 44 sind nebeneinander in einer Reihe entlang der Breite der Presskammer 12 angeordnet und senkrecht zur Oberfläche ausgerichtet. Zwei der Ultraschallsensoren 42, 44 sind auf eine Seitenfläche des Rundballens 16 gerichtet, um zu ermitteln, ob auch die Seitenflächen des Rundballens 16 mit der ersten Folie 18 bedeckt sind. Die in Figur 5 gezeigte Anordnung der Ultraschallsensoren 42, 44 kann aber auch nur fünf oder vier oder drei oder zwei oder nur einen Ultraschallsensor 42, 44 aufweisen.

Figur 6 zeigt teilweise eine schematische Darstellung eines dritten Ausführungsbeispiels der erfindungsgemässen Rundballenpresse 10. Die in Figur 6 gezeigte Rundballenpresse 10 entspricht im Wesentlichen der in den Figuren 1, 2 und 5 gezeigten Rundballenpresse 10 und kann den in den Figuren 4a und 4b gezeigten Ultraschallsensor 42, 44 sowie dessen Anordnung bzw. Anordnungsmöglichkeiten umfassen, sodass im Folgenden lediglich auf die Unterschiede eingegangen wird. Der Ultraschallsensor 42, 44 ist mittels eines Halteelements 86 ausserhalb der Presskammer 12 an einem Seitenelement der Presskammer 12, hier als Seitenwand 80 ausgebildet, beispielsweise der rechten Seitenwand, angeordnet. Der Ultraschallsensor 42, 44 kann aber auch an einer weiteren Seitenwand 88, beispielsweise der linken Seitenwand, der Presskammer 12 angeordnet sein. Der Ultraschallsensor 42, 44 ist dabei derart angeordnet, dass der Ultraschallsensor 42, 44 mit der Flächennormalen 74 der Oberfläche des Rundballens 16 einen Ausrichtungswinkel 76 einschliesst. Im Weiteren weist die Seitenwand 80 eine Sensoröffnung 84 auf. Die Sensoröffnung 84 kann beispielsweise als ein Loch oder eine Durchgangsbohrung ausgebildet sein. Der Ultraschallsensor 42, 44 ist derart angeordnet, insbesondere ausgerichtet, dass eine vom Ultraschallsensor 42, 44 ausgesendete Ultraschallwelle 70 bzw. der Ultraschallimpuls 70 in die Presskammer 12 gerichtet ist, d.h. sich vom Ultraschallsensor 42, 44 durch die Sensoröffnung 84 zum Rundballen 16 und/oder zur ersten Folie 18 ausbreitet. Darüber hinaus umfasst die Rundballenpresse 10 ein Abschirmelement 82, welches beispielsweise ein Abschirmblech 82 sein kann, mittels welchem verhindert wird, dass sich das in der Presskammer 12 befindende Erntegut in der Sensoröffnung 84 sammelt, diese blockiert bzw. verstopft und der Ultraschallsensor verschmutzt wird.

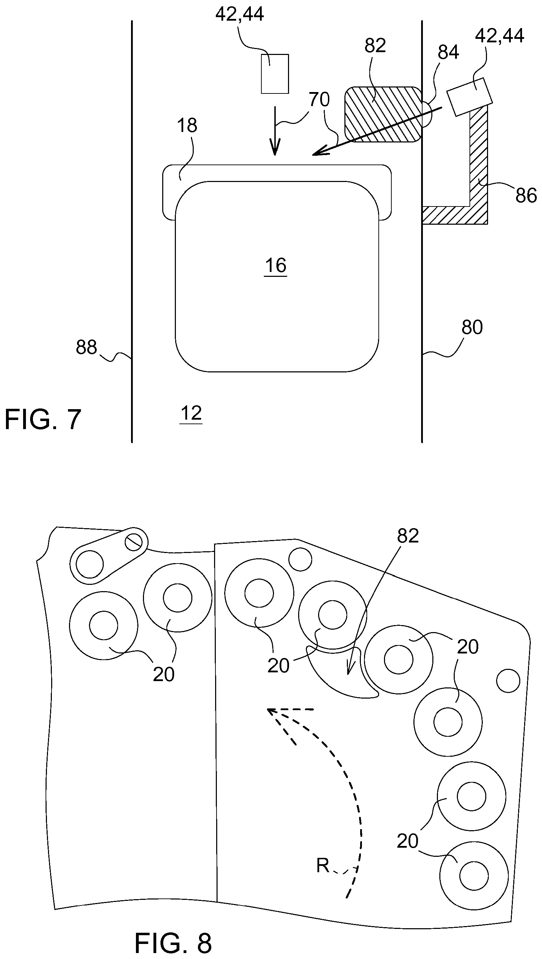

Figur 7 zeigt teilweise eine schematische Darstellung eines vierten Ausführungsbeispiels der erfindungsgemässen Rundballenpresse 10. Die in Figur 7 gezeigte Rundballenpresse 10 entspricht im Wesentlichen der in den Figuren 1 bis 2, 5 und 6 gezeigten Rundballenpresse 10 und kann den in den Figuren 4a und 4b gezeigten Ultraschallsensor 42, 44 sowie dessen Anordnung bzw. Anordnungsmöglichkeiten umfassen, sodass im Folgenden lediglich auf die Unterschiede eingegangen wird. Figur 7 umfasst den Ultraschallsensor 44 ausserhalb der Presskammer 12 sowie den zweiten Ultraschallsensor 42 der innerhalb der Presskammer 12 angeordnet ist.

Figur 8 zeigt teilweise eine schematische Darstellung eines fünften Ausführungsbeispiels der erfindungsgemässen Rundballenpresse 10. Die in Figur 8 gezeigte Rundballenpresse 10 entspricht im Wesentlichen der in den Figuren 1 bis 2 und 5 bis 7 gezeigten Rundballenpresse 10 und kann den in den Figuren 4a und 4b gezeigten Ultraschallsensor 42, 44 sowie dessen Anordnung bzw. Anordnungsmöglichkeiten umfassen, sodass im Folgenden lediglich auf die Unterschiede eingegangen wird. Figur 8 zeigt, wie das Abschirmelement 82 in der Presskammer 12 zwischen den Presselementen, hier die Rollen 20, angeordnet sein kann. Darüber hinaus ist die Richtung der Ballenrotation R aufgezeigt.

## Patentansprüche

1. Rundballenpresse mit einer Presskammer (12), in der ein Rundballen (16) erzeugbar ist, und einer Umwicklungseinrichtung (14), mit der ein fertig gepresster Rundballen (16) in der Presskammer (12) mit einer ersten Folie (18) umhüllbar ist, und einer Zuführeinrichtung (24) zum Einführen der ersten Folie (18) in die Presskammer (12), und einer Zufuhrstelle (21), an der die erste Folie (18) der Presskammer (12) zuführbar ist, und die Rundballenpresse (10) einen Ultraschallsensor (42, 44) umfasst, der an der Presskammer (12) angeordnet ist, derart, dass mit dem Ultraschallsensor (42, 44) ermittelbar ist, ob auf einer Oberfläche des Rundballens (16) die erste Folie (18) vorhanden ist,
**dadurch gekennzeichnet, dass**
der Ultraschallsensor (42, 44) derart angeordnet und ausgestaltet ist, dass der Ultraschallsensor (42, 44) mit der Flächennormalen (74) der Oberfläche des Rundballens (16) einen Ausrichtungswinkel (76, β) von 85 ≤ β ≤ 10 Grad einschliesst, und ein Echo eines vom Ultraschallsensor (42, 44) ausgesendeten Ultraschallimpulses (70) teilweise oder vollständig vom Rundballen (16) in Richtung des Ultraschallsensors (42, 44) reflektierbar und vom Ultraschallsensor empfangbar ist, wenn auf der Oberfläche des Rundballens keine erste Folie vorhanden ist.

2. Rundballenpresse nach Anspruch 1, umfassend eine Ballenwickeleinrichtung (54) zum Umhüllen des Rundballens (16) mit einer zweiten Folie (58), wobei sich die Ballenwickeleinrichtung (54) entlang einer Längsachse (L) der Rundballenpresse (10) an die Presskammer (12) anschliesst.

3. Rundballenpresse nach einem der vorangehenden Ansprüche, **dadurch gekennzeichnet, dass** die Presskammer (12) ein Seitenelement (80, 88) umfasst, in dem eine Sensoröffnung (84) ausgebildet ist und an der Sensoröffnung (84) ein Abschirmelement (82) derart angeordnet ist, dass kein Erntegut aus der Presskammer (12) an und/oder in die Sensoröffnung (84) gelangt.

4. Rundballenpresse nach einem der vorangehenden Ansprüche, **dadurch gekennzeichnet, dass** der Ultraschallsensor (42, 44) an einem Halteelement (86) angeordnet ist und das Halteelement (86) an der Presskammer (12) befestigt ist.

5. Rundballenpresse nach einem der vorangehenden Ansprüche, **dadurch gekennzeichnet, dass** zwei oder mehrere Ultraschallsensoren (42, 44) vorgesehen sind.

6. Rundballenpresse nach einem der vorangehenden Ansprüche, **dadurch gekennzeichnet, dass** eine Zufuhr der ersten Folie (18) und/oder eine Rotation des Rundballens (16) in Abhängigkeit von einem Ausgangssignal des Ultraschallsensors (42, 44) einstellbar ist.

7. Rundballenpresse nach einem der vorangehenden Ansprüche, **dadurch gekennzeichnet, dass** die Rundballenpresse (10) eine Steuereinheit (ECU) umfasst, und der Ultraschallsensor (42, 44) mit der Steuereinheit (ECU) signalverbunden ist.

8. Rundballenpresse nach einem der vorangehenden Ansprüche 2 bis 7, **dadurch gekennzeichnet, dass** die erste Folie (18) ein kleineres Elastizitätsmodul als das zweite Folie (58) aufweist.

9. Erkennungsverfahren zur Erkennung einer ersten Folie (18) auf einer Oberfläche eines Rundballens (16), umfassend eine Rundballenpresse (10) mit einer Presskammer (12), in der ein Rundballen (16) erzeugt wird,
und eine Umwicklungseinrichtung (14), mit der ein fertig gepresster Rundballen (16) in der Presskammer (12) mit der ersten Folie (18) umhüllt wird,
und einer Zuführeinrichtung (24) mit der die ersten Folie (18) an einer Zufuhrstelle (21) in die Presskammer (12) eingeführt wird, und die Rundballenpresse (10) einen Ultraschallsensor (42, 44) umfasst, der an der Presskammer (12) angeordnet ist, derart, dass mit dem Ultraschallsensor (42, 44) ermittelt wird, ob auf der Oberfläche des Rundballens (16) die erste Folie (18) vorhanden ist,
**dadurch gekennzeichnet, dass**
der Ultraschallsensor (42, 44) derart angeordnet und ausgestaltet ist, dass der Ultraschallsensor (42, 44) mit der Flächennormalen (74) der Oberfläche des Rundballens (16) einen Ausrichtungswinkel (76,β) von 85 ≤ β ≤ 10 Grad einschliesst, und ein Echo eines vom Ultraschallsensor (42, 44) ausgesendeten Ultraschallimpulses (70) teilweise oder vollständig vom Rundballen (16) in Richtung des Ultraschallsensors (42, 44) reflektiert und vom Ultraschallsensor empfangen wird, wenn auf der Oberfläche des Rundballens keine erste Folie vorhanden ist.

## Claims

1. Roundbaler having a bale chamber (12), in which a round bale (16) can be produced, and a wrapping device (14), with which a completely pressed round bale (16) can be wrapped with a first film (18) in the bale chamber (12), and a feed device (24) for feeding the first film (18) into the bale chamber (12), and a feed point (21), at which the first film (18) can be fed to the bale chamber (12), and the roundbaler (10) comprises an ultrasonic sensor (42, 44), which is arranged at the bale chamber (12) in such a way that with the ultrasonic sensor (42, 44) it is possible to determine whether the first film (18) is present on a surface of the round bale (16), **characterized in that**
the ultrasonic sensor (42, 44) is arranged and configured in such a way that the ultrasonic sensor (42, 44) encloses an orientation angle (76, β) of 85 ≤ β ≤ 10 degrees with the surface normal (74) of the surface of the round bale (16), and an echo of an ultrasonic pulse (70) emitted by the ultrasonic sensor (42, 44) can be partially or completely reflected by the round bale (16) in the direction of the ultrasonic sensor (42, 44) and received by the ultrasonic sensor if no first film is present on the surface of the round bale.

2. Roundbaler according to Claim 1, comprising a bale-wrapping device (54) for wrapping the round bale (16) with a second film (58), wherein the bale-wrapping device (54) adjoins the bale chamber (12) along a longitudinal axis (L) of the roundbaler (10).

3. Roundbaler according to one of preceding claims, **characterized in that** the bale chamber (12) comprises a side element (80, 88), in which a sensor opening (84) is formed, and a shielding element (82) is arranged at the sensor opening (84) in such a way that no crop from the bale chamber (12) gets to and/or into the sensor opening (84).

4. Roundbaler according to one of preceding claims, **characterized in that** the ultrasonic sensor (42, 44) is arranged on a holding element (86) and the holding element (86) is attached to the bale chamber (12).

5. Roundbaler according to one of the preceding claims, **characterized in that** two or more ultrasonic sensors (42, 44) are provided.

6. Roundbaler according to one of the preceding claims, **characterized in that** feeding of the first film (18) and/or rotation of the round bale (16) can be adjusted as a function of an output signal of the ultrasonic sensor (42, 44).

7. Roundbaler according to one of the preceding claims, **characterized in that** the roundbaler (10) comprises a control unit (ECU), and the ultrasonic sensor (42, 44) is connected in a signal-transmitting fashion to the control unit (ECU).

8. Roundbaler according to one of the preceding Claims 2 to 7, **characterized in that** the first film (18) has a smaller elasticity modulus than the second film (58).

9. Detection method for detecting a first film (18) on a surface of a round bale (16), comprising a roundbaler (10) with a bale chamber (12), in which a round bale (16) is produced,
and a wrapping device (14), with which a completely pressed round bale (16) is wrapped with the first film (18) in the bale chamber (12),
and a feed device (24), with which the first film (18) is fed into the bale chamber (12) at a feed point (21), and the roundbaler (10) comprises an ultrasonic sensor (42, 44), which is arranged at the bale chamber (12) in such a way that with the ultrasonic sensor (42, 44) it is determined whether the first film (18) is present on the surface of the round bale (16),
**characterized in that**
the ultrasonic sensor (42, 44) is arranged and configured in such a way that the ultrasonic sensor (42, 44) encloses an orientation angle (76, β) of 85 ≤ β ≤ 10 degrees with the surface normal (74) of the surface of the round bale (16), and an echo of an ultrasonic pulse (70) emitted by the ultrasonic sensor (42, 44) is partially or completely reflected by the round bale (16) in the direction of the ultrasonic sensor (42, 44) and received by the ultrasonic sensor if no first film is present on the surface of the round bale.

## Revendications

1. Presse à balles rondes comportant une chambre de presse (12) dans laquelle une balle ronde (16) peut être produite, et un dispositif d'emballage (14) au moyen duquel une balle ronde pressée finie (16) peut être enveloppée avec un premier film (18) dans la chambre de presse (12), et un dispositif d'alimentation (24) pour insérer le premier film (18) dans la chambre de presse (12), et un point d'alimentation (21) au niveau duquel le premier film (18) peut être introduit dans la chambre de presse (12), et la presse à balles rondes (10) comprend un capteur à ultrasons (42, 44) disposé sur la chambre de presse (12) de sorte qu'il peut être déterminé au moyen du capteur à ultrasons (42, 44) si le premier film (18) est présent sur une surface de la balle ronde (16), **caractérisée en ce que**
le capteur à ultrasons (42, 44) est agencé et conçu de telle sorte que le capteur à ultrasons (42, 44) forme avec la normale (74) à la surface de la balle ronde (16) un angle d'alignement (76, β) de 85 ≤ β ≤ 10 degrés, et qu'un écho d'une impulsion ultrasonore (70) émise par le capteur à ultrasons (42, 44) puisse être partiellement ou entièrement réfléchi par la balle ronde (16) en direction du capteur à ultrasons (42, 44) et puisse être reçu par le capteur à ultrasons lorsqu'aucun premier film n'est présent sur la surface de la balle ronde.

2. Presse à balles rondes selon la revendication 1, comprenant un dispositif d'emballage de balles (54) pour envelopper la balle ronde (16) avec un deuxième film (58), le dispositif d'emballage de balles (54) se raccordant à la chambre de presse (12) le long d'un axe longitudinal (1) de la presse à balles rondes (10).

3. Presse à balles rondes selon l'une quelconque des revendications précédentes, **caractérisée en ce que** la chambre de presse (12) comprend un élément latéral (80, 88) dans lequel est formée une ouverture de capteur (84) et **en ce qu'**un élément de protection (82) est disposé sur l'ouverture de capteur (84) de telle sorte qu'aucun produit récolté provenant de la chambre de presse (12) ne pénètre sur et/ou dans l'ouverture de capteur (84).

4. Presse à balles rondes selon l'une quelconque des revendications précédentes, **caractérisée en ce que** le capteur à ultrasons (42, 44) est disposé sur un élément de maintien (86) et **en ce que** l'élément de maintien (86) est fixé à la chambre de presse (12).

5. Presse à balles rondes selon l'une quelconque des revendications précédentes, **caractérisée en ce qu'**il est prévu deux capteurs à ultrasons (42, 44) ou plus.

6. Presse à balles rondes selon l'une quelconque des revendications précédentes, **caractérisée en ce qu'**une alimentation du premier film (18) et/ou une rotation de la balle ronde (16) est/sont réglable(s) en fonction d'un signal de sortie du capteur à ultrasons (42, 44).

7. Presse à balles rondes selon l'une quelconque des revendications précédentes, **caractérisée en ce que** la presse à balles rondes (10) comprend une unité de commande (ECU), et **en ce que** le capteur à ultrasons (42, 44) est relié par signal à l'unité de commande (ECU).

8. Presse à balles rondes selon l'une quelconque des revendications 2 à 7 précédentes, **caractérisée en ce que** le premier film (18) présente un module d'élasticité inférieur à celui du deuxième film (58).

9. Procédé de détection permettant de détecter un premier film (18) sur une surface d'une balle ronde (16) comprenant une presse à balles rondes (10) dotée d'une chambre de presse (12) dans laquelle une balle ronde (16) est produite,
et un dispositif d'emballage (14) qui enveloppe une balle ronde pressée finie (16) dans la chambre de presse (12) avec le premier film (18),
et un dispositif d'alimentation (24) au moyen duquel le premier film (18) est introduit dans la chambre de presse (12) au niveau d'un point d'alimentation (42), et la presse à balles rondes (10) comprend un capteur à ultrasons (21, 44) disposé sur la chambre de presse (12) de sorte qu'il peut être déterminé au moyen du capteur à ultrasons (42, 44) si le premier film (18) est présent sur la surface de la balle ronde (16),
**caractérisé en ce que**
le capteur à ultrasons (42, 44) est agencé et conçu de telle sorte que le capteur à ultrasons (42, 44) forme avec la normale (74) à la surface de la balle ronde (16) un angle d'alignement (76, β) de 85 ≤ β ≤ 10 degrés, et qu'un écho d'une impulsion ultrasonore (70) émise par le capteur à ultrasons (42, 44) puisse être partiellement ou entièrement réfléchi par la balle ronde (16) en direction du capteur à ultrasons (42, 44) et puisse être reçu par le capteur à ultrasons lorsqu'aucun premier film n'est présent sur la surface de la balle ronde.
